# EUROPÄISCHE PATENTANMELDUNG

(11) **EP 1 004 490 A1**
(43) Veröffentlichungstag der Anmeldung: **31.05.2000**
(21) Anmeldenummer: 99121827.2
(22) Anmeldetag: 04.11.1999
(51) Int. Cl.: B60S 3/04

(54) **Vorrichtung zur Positionierung von Kraftfahrzeugen vor Fahrzeugwaschanlagen**

(30) Priorität: 25.11.1998 DE 29821066 U
(71) Anmelder: WESUMAT Fahrzeugwaschanlagen GmbH, D-86156 Augsburg (DE)
(72) Erfinder: Decker, Wolfgang, 86441 Zusmarshausen-Wollbach (DE)
(74) Vertreter: Charrier, Rolf, Dipl.-Ing.

(57) **Zusammenfassung**

Bei dieser Vorrichtung zur Positionierung von Kraftfahrzeugen (F) vor Fahrzeugwaschanlagen, insbesondere Portalwaschanlagen, ist dem Portal, welches einen Lichtraum vorbestimmter Durchfahrtsbreite (D) aufweist, der seitlich durch gedachte, im wesentlichen vertikale und sich in Bewegungsrichtung erstreckende Begrenzungsebenen (E1, E2) begrenzt ist, jeder Begrenzungsebene (E1, E2) mindestens eine Sender-/Empfängereinrichtung (5, 6) zugeordnet. Diese sendet in dem Raum vor dem Portal (1) im wesentlichen in der Begrenzungsebene (E1, E2) verlaufende Signale aus und empfängt diese. Für jede Begrenzungsebene (E1, E2) ist eine von der zugehörigen Sender-/Empfängereinrichtung (5, 6) beeinflußte, im Sichtfeld des Fahrers liegende Anzeigevorrichtung (9, 10) vorgesehen, derart, daß bei Änderung der empfangenen Signale infolge von in die jeweilige Begrenzungsebene (E1, E2) hineinragender Fahrzeugteile (4) die zugehörige Anzeigevorrichtung (9, 10) aktiviert wird.

## Beschreibung

Die Erfindung betrifft eine Vorrichtung zur Positionierung von Kraftfahrzeugen vor Fahrzeugwaschanlagen, insbesondere Portalwaschanlagen, mit einem in einer Bewegungsrichtung relativ vom Kraftfahrzeug beweglichen Portal, welches einen Lichtraum (freien Durchgang) vorbestimmter Durchfahrtsbreite aufweist, der seitlich durch gedachte, im wesentlichen vertikale und sich in Bewegungsrichtung erstreckende Begrenzungsebenen begrenzt ist.

Portalwaschanlagen verfügen, bedingt durch die vorgegebene Baugröße vorhandener Waschhallen, eine maximale Durchfahrtsbreite von 2,2 m. Durch die heute gängigen Fahrzeugbreiten, insbesondere durch die aus Sicherheitsgründen an den Fahrzeugen montierten größeren Außenspiegel, wird es für Durchschnittsfahrer zunehmend schwieriger ihr Fahrzeug in der Waschhalle so vor dem Portal abzustellen, daß ein ordnungsgemäßer und für das Fahrzeug schadensfreier Waschvorgang möglich ist. Es kommt vermehrt zu Beschädigungen der Außenspiegel, die an Hochdruckdüsen, Trocknungsdüsen und anderen am Portal angebauten Teilen, wie z.B. Wasserrohren usw., anstoßen. Üblicherweise wird dieses Beschädigungsrisiko durch den Einbau von Radleitschienen am Hallenboden verringert. Um jedoch die Wäsche von Kleintransportern, Off-Road-Fahrzeugen und dgl. zu ermöglichen, müssen die Radleitschienen mit einem gegenseitigen Innenabstand von 2 m verlegt werden. Dies führt dazu, daß es trotz der Radleitschienen zu Schäden an Rückblickspiegeln kommen kann, wenn die Fahrzeuge nicht mittig, sondern mit den Rädern rechts oder links an den Radleitschienen anliegend abgestellt werden. Die dann noch mögliche Beschädigungsquote könnte durch die Absicherung des Liehtraumes mittels Kontaktleisten, Lichtschranken oder ähnlichem vermieden werden. Diese Methode hat jedoch den Nachteil, daß es zu einer Notabschaltung der Portalwaschanlage während des Waschvorganges kommt. Dies erfordert einen Personaleinsatz, der an Tankstellen, die zumeist nur noch mit einer Person an der Kasse betrieben werden, nicht möglich ist.

Diese Kassenkraft müßte vor dem Verlassen des Tankstellenshops alle Kunden aus diesem entfernen, Kasse und Shop verschließen, da sonst kein Versicherungsschutz besteht.

Der Erfindung liegt daher die Aufgabe zugrunde, eine Vorrichtung zur Positionierung von Kraftfahrzeugen vor Fahrzeugwaschanlagen, insbesondere Portalwaschanlagen, der eingangs erwähnten Art aufzuzeigen, die es dem Fahrer ermöglicht, sein Fahrzeug bereits während des Einfahrens in die Waschanlage so vor dem Portal zu positionieren, daß während des Waschvorganges keine Fahrzeugteile über den Lichtraum des Portals hinausragen.

Dies wird nach der Erfindung dadurch erreicht, daß jeder Begrenzungsebene mindestens eine Sender-/Empfängereinrichtung zugeordnet ist, die in den Raum vor dem Portal (Einfahrtsbereich) im wesentlichen in der Begrenzungsebene verlaufende Signale aussendet und empfängt, und daß für jede Begrenzungsebene eine von der zugehörigen Sender-/Empfängereinrichtung beeinflußte, im Sichtfeld des Fahrers liegende Anzeigevorrichtung vorgesehen ist, derart, daß bei Änderung der empfangenen Signale infolge von in die jeweilige Begrenzungsebene hineinragender Fahrzeugteile die zugehörige Anzeigevorrichtung aktiviert wird.

Der Vorteil dieser Vorrichtung liegt darin, daß das System den Fahrer des Fahrzeugs anweist, ob er während des Einfahrens in die Waschhalle seine Fahrtrichtung nach links oder rechts korrigieren muß. Werden nämlich die von der Sender-/Empfängereinrichtung ausgesandten Signale während des Einfahrens des Fahrzeuges durch ein in die Begrenzungsebene hineinragendes Fahrzeugteil, z.B. einen Außenspiegel, gestört, dann wird dies von der Sender-/Empfängereinrichtung an die Anzeigevorrichtung gemeldet. Durch optische Anzeige, beispielsweise in Form von blinkenden Lampen, blinkenden Pfeilen und/oder akustische Einrichtungen, wird der Fahrer auf die Fehlstellung des Fahrzeuges hingewiesen und kann noch während des Einfahrens seine Fahrtrichtung korrigieren, wodurch normalerweise der Außenspiegel nicht mehr in die Begrenzungsebene eintaucht. Dies führt dazu, daß dann die Anzeigevorrichtung wieder ausgeschaltet wird. Sollte der Fahrer keine oder eine ungenügende Korrektur seiner Fahrtrichtung vornehmen, bleibt die Anzeigevorrichtung weiterhin aktiviert. Die Sender-/Empfängereinrichtung kann auch so mit dem Antrieb des Portals gekoppelt sein, daß der Waschprozeß überhaupt nicht gestartet wird. Es ist dann auch kein manueller Eingriff durch das Bedienungspersonal erforderlich. Dem Fahrer kann optisch und akustisch angezeigt werden, daß er sein Fahrzeug neu positionieren muß. Durch die korrekte Positionierung des Fahrzeuges innerhalb des Lichtraumes des Portales wird selbstverständlich die Beschädigung von vorstehenden Fahrzeugteilen, wie Außenspiegeln, vermieden.

Vorteilhafte Ausgestaltungen der Erfindung sind in den Unteransprüchen gekennzeichnet.

Die Erfindung ist in folgendem, anhand von in der Zeichnung dargestellten Ausführungsbeispielen näher erläutert. Es zeigen:
- Fig. 1: die Seitenansicht einer Portalwaschanlage mit der erfindungsgemäßen Vorrichtung,
- Fig. 2: die zugehörige Draufsicht in Richtung II der Fig. 1,
- Fig. 3: die zugehörige Stirnansicht in Richtung III der Fig. 1,
- Fig. 4 - 6: Seitenansicht, Draufsicht und Stirnansicht eines zweiten Ausführungsbeispieles.

In der Zeichnung ist die Erfindung an Portalwaschanlagen erläutert, weil sie speziell hierfür geeignet ist. Gegebenenfalls könnte jedoch die erfindungsgemäße Vorrichtung auch im Einfahrtsbereich einer Waschstraße angeordnet sein, um dem Fahrer das korrekte Einfahren in die Waschstraße zu erleichtern.

Das Portal 1 einer Portalwaschanlage ist in Bewegungsrichtung B hin- und herfahrbar. Es trägt üblicherweise Wascheinrichtungen in Form von horizontalen und vertikalen Waschbürsten, Hochdruckdüsen, Trocknungsdüsen und dgl.. In der Zeichnung sind von diesen Arbeitseinrichtungen nur zwei seitliche Trocknungseinrichtungen 2 dargestellt. Vor Beginn des Waschprozesses nimmt das Portal 1 eine Stellung in der Nähe der Rückwand 3 einer Waschhalle ein, deren Einfahrtstor der Rückwand 3 gegenüberliegend angeordnet ist.

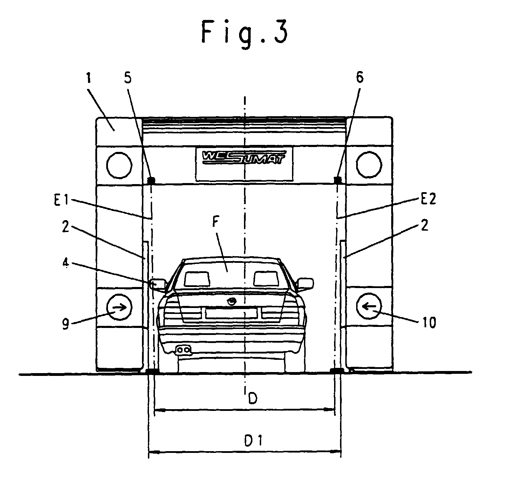

Das Portal 1 hat einen freien Durchgang, der im allgemeinen als Lichtraum bezeichnet wird. Dieser Lichtraum ist in Fig. 3 mit strichpunktierten Linien angedeutet. Die Durchfahrtsbreite D des Lichtraumes ist um einen beidseitigen Sicherheitsabstand kleiner als der gegenseitige Abstand D1 der beiden Trocknungsdüsen 2 oder anderer Arbeitseinrichtungen des Portals. Der Lichtraum muß so bemessen sein, daß ein innerhalb des Lichtraumes positioniertes Fahrzeug mit keinem seiner Teile mit Einrichtungen des Portals 1 kollidiert. Der Lichtraum ist seitlich durch gedachte, im wesentlichen vertikale und sich in Bewegungsrichtung B erstreckende Begrenzungsebenen E1 und E2 begrenzt.

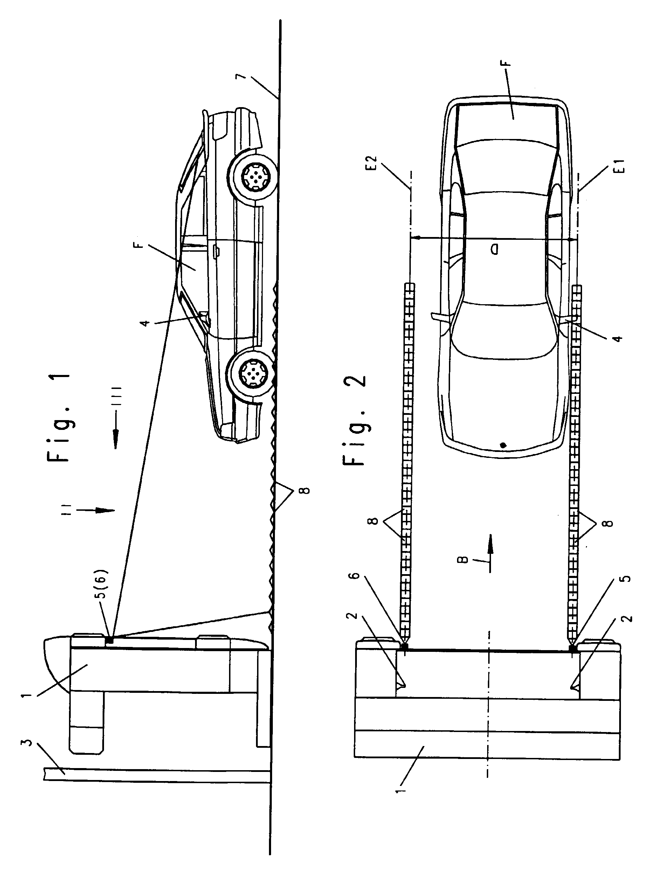

Das zu waschende Fahrzeug F wird gemäß den Zeichnungen Fig. 1 und 2 von rechts kommend in die Waschhalle hineingefahren und muß vor Beginn des Waschprozesses so vor dem Portal 1 positioniert werden, daß es sich mit allen seinen Teilen innerhalb des durch die seitlichen Begrenzungsebenen E1 und E2 definierten Lichtraumes befindet. Zum besseren Verständnis ist das Fahrzeug F in Fig. 2 und 3 jedoch nicht in seiner korrekten Position dargestellt, sondern in Fahrtrichtung des Fahrzeuges gesehen, etwas nach links versetzt, so daß der linke Außenspiegel 4 des Fahrzeuges in die Ebene E1 hineinragt und diese durchdringt.

Ferner ist gemäß der Erfindung jeder Begrenzungsebene E1 und E2 mindestens eine Sender-/Empfängereinrichtung 5, 6 zugeordnet. Jede der beiden Sender-/Empfängereinrichtungen 5, 6 sendet Signale innerhalb einer in Draufsicht gesehen sehr schmalen Signalkeule aus, die im wesentlichen in der jeweiligen Begrenzungsebene E1 bzw. E2 verlaufen. Je nach dem technisch-physikalischen Wirkprinzip der verwendeten Sender-/Empfängereinrichtung werden die Signale vom Hallenboden oder am Hallenboden angeordneten Reflexionseinrichtungen normalerweise reflektiert und vom Empfänger der Einrichtung empfangen. Wenn irgendein Fahrzeugteil, z.B. ein Außenspiegel, in den im wesentlichen in der gedachten Begrenzungsebene E1 oder E2 verlaufenden Signalverlauf eintaucht, wird die Intensität des am Empfänger aufgenommenen Signals verändert. Man kann jedoch die Sender-/Empfängereinrichtung technisch-physikalisch auch so ausgestalten, daß von irgendwelchen normalerweise vorhandenen Einrichtungen, wie dem Hallenboden, keine Signale reflektiert werden und normalerweise am Empfänger auch keine Signale empfangen werden. Erst wenn ein Teil des Fahrzeuges, z.B. ein Außenspiegel, in die Begrenzungsebene E1 oder E2 gelangt, wird das Signal reflektiert und vom Empfänger aufgenommen.

Die Sender-/Empfängereinrichtungen 5, 6 können nach dem Prinzip der Radartechnik aufgebaut sein. Die Sender-/Empfängereinrichtungen 5, 6 können jedoch auch nach dem Prinzip der Lichttechnik, insbesondere mit Infrarotlicht, arbeiten.

Zweckmäßig sind am Boden 7 der Waschhalle entlang jeder Begrenzungsebene E1, E2 Reflexionseinrichtungen 8 vorgesehen, die zweckmäßig an den üblichen Radleitschienen angebracht sind. Durch diese Reflexionseinrichtungen 8 ist es möglich, die Sender-/Empfängereinrichtung mit geringerer Leistung zu betreiben, da die ausgesandten Signale gezielter reflektiert werden und der vom Empfänger registrierte Pegel erhöht werden kann.

Während bei einer Portalwaschanlage die Sender-/Empfängereinrichtungen 5, 6 in zweckmäßiger Weise am Portal 1 angebracht sind, können sie bei Waschstraßen an einer beliebigen Halterung, auch in einem Bereich oberhalb des Einfahrtstores angeordnet sein.

Die Sender-/Empfängereinrichtung 5 arbeitet mit einer am Portal 1 vorgesehenen Anzeigevorrichtung 9 zusammen, während die Sender-/Empfängereinrichtung 6 die zweite am Portal 1 vorgesehene Anzeigevorrichtung 10 beeinflußt. Bei den Anzeigevorrichtungen 9, 10 kann es sich zweckmäßig um optische Anzeigevorrichtungen in Form von blinkenden Lampen, blinkenden Pfeilen oder dgl. handeln. Die Anzeigevorrichtung kann auch mit einem akustischen, die Aufmerksamkeit des Fahren erregenden, Signal gekoppelt sein. Gegebenenfalls kann die Anzeigevorrichtung auch gespeicherte mündliche Signale, wie z.B. 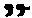 Bitte rechts" oder 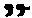 Bitte links" aussenden.

Die Wirkungsweise dieser neuen Vorrichtung ist folgende:

Wenn der Fahrer das Fahrzeug F in die Waschhalle einfährt und dabei gegenüber dem Portal 1 zu weit links fährt, durchdringt der linke Außenspiegel 4 die gedachte Begrenzungsebene E1. Der Außenspiegel 4 kommt damit in den von der Sender-/Empfängereinrichtung 5 ausgesandten Signalverlauf, wodurch sich das vom Empfänger empfangene Signal ändert. Diese Änderung wird dazu ausgenützt, die Anzeigevorrichtung 9 zu aktivieren. Der Pfeil der Anzeigevorrichtung 9 fängt zu blinken an und gegebenenfalls ertönt auch ein akustisches Signal. Hierdurch wird dem Fahrer angezeigt, daß er sein Fahrzeug weiter nach rechts steuern muß. Wenn er die richtige und ausreichende Korrektur vornimmt, gelangt der linke Außenspiegel 4 aus dem Signalvorlauf der Sender-/Empfängereinrichtung 5 und das Fahrzeug ist dann korrekt gegenüber dem Portal 1 innerhalb von dessen Lichtraum positioniert. Die Sender-/Empfängereinrichtungen 5, 6 werden abgeschaltet und der Waschvorgang kann beginnen. Wenn das Fahrzeug F nicht richtig positioniert wurde und der Außenspiegel 4 weiterhin in die Begrenzungsebene E1 hineinragt, bleiben die Sender-/Empfängereinrichtungen 5, 6 weiterhin aktiviert. Durch die Sender-/Empfängereinheit 5 wird gleichzeitig der Fahrantrieb des Portals 1 blockiert. Durch Aufleuchten z.B. einer Anzeigetafel wird dein Fahrer mitgeteilt, daß er das Fahrzeug zurücksetzen und neu positionieren muß.

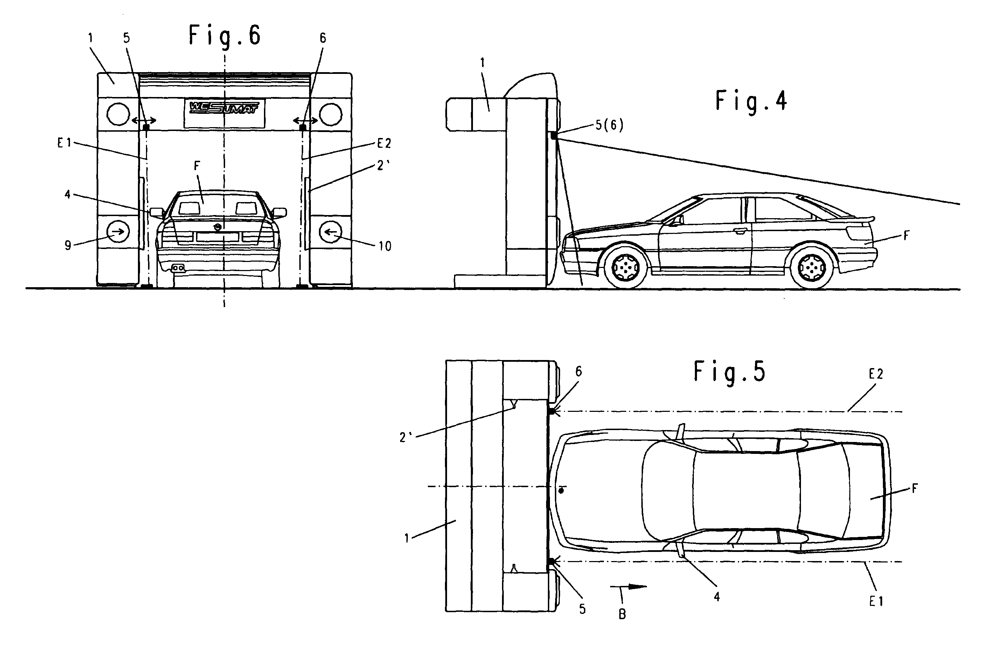

Bei dem in Fig. 4 - 6 dargestellten Ausführungsbeispiel sind die Sender-/Empfängereinrichtungen 5, 6 am Portal horizontal und quer zur Bewegungsrichtung B, wie mit den Pfeilen in Fig. 6 angedeutet, verschiebbar angeordnet. Zur Positionierung des Fahrzeuges werden sie jeweils gemäß Fig. 5 und 6 in eine äußere Stellung gebracht, in welcher die von ihnen ausgesendeten Signale im wesentlichen in der Begrenzungsebene E1 bzw. E2 liegen. Nachdem das Fahrzeug in der vorherbeschriebenen Weise korrekt gegenüber dem Portal positioniert wurde, so daß kein Fahrzeugteil über den von den Begrenzungsebenen E1, E2 definierten Lichtraum hinausragt, kann das Fahrzeug immer noch außermittig gegenüber dem Arbeitsbereich des Portals positioniert sein, wie es in der Zeichnung dargestellt ist. Dies hat den Nachteil, daß z.B. die rechte Trocknungsdüse 2' in einem zu großen Abstand von der rechten Seite des Fahrzeuges angeordnet ist und nur eine unzureichende Trocknung erzielt werden würde. Durch Verschiebung der Sender-/Empfängereinrichtungen 5, 6 zur Fahrzeugmitte hin, kann man die tatsächliche Position des Fahrzeuges feststellen. Sobald z.B. die rechte Sender-/Empfängereinrichtung 6 bei der Verschiebung zur Fahrzeugmitte den rechten Außenspiegel erfaßt und eine Änderung des empfangenen Signals festgestellt wird, wird sie stillgesetzt. Entsprechend dem von der Sender-/Empfängereinrichtung 6 zur Fahrzeugmitte hin zurückgelegten Weg wird auch die rechte Trocknungsdüse 2' nach innen bewegt, so daß sie sich in einem optimalen Abstand zum Fahrzeug befindet. In ähnlicher Weise können auch Hochdruckdüsen gesteuert werden.

## Patentansprüche

1. Vorrichtung zur Positionierung von Kraftfahrzeugen vor Fahrzeugwaschanlagen, insbesondere Portalwaschanlagen, mit einem in einer Bewegungsrichtung relativ zum Kraftfahrzeug beweglichen Portal, welches einen Lichtraum (freien Durchgang) vorbestimmter Durchfahrtsbreite aufweist, der seitlich durch gedachte, im wesentlichen vertikale und sich in Bewegungsrichtung erstreckende Begrenzungsebenen begrenzt ist, **dadurch gekennzeichnet**, daß jeder Begrenzungsebene (E1, E2) mindestens eine Sender-/Empfängereinrichtung (5, 6) zugeordnet ist, die in den Raum vor dem Portal (1) (Einfahrtsbereich) im wesentlichen in der Begrenzungsebene (E1, E2) verlaufende Signale aussendet und empfängt, und daß für jede Begrenzungsebene (E1, E2) eine von der zugehörigen Sender-/Empfängereinrichtung (5, 6) beeinflußte, im Sichtfeld des Fahrers liegende Anzeigevorrichtung (9, 10) vorgesehen ist, derart, daß bei Änderung der empfangenen Signale infolge von in die jeweilige Begrenzungsebene (E1, E2) hineinragender Fahrzeugteile (4) die zugehörige Anzeigevorrichtung (9, 10) aktiviert wird.

2. Vorrichtung nach Anspruch 1, **dadurch gekennzeichnet**, daß am Boden (7) der Waschhalle entlang jeder Begrenzungsebene Reflexionseinrichtungen (8) vorgesehen sind.

3. Vorrichtung nach Anspruch 1 oder 2, **dadurch gekennzeichnet**, daß die Sender-/Empfängereinrichtung (5, 6) nach dem Prinzip der Radartechnik aufgebaut ist.

4. Vorrichtung nach Anspruch 1 oder 2, **dadurch gekennzeichnet**, daß die Sender-/Empfängereinrichtung (5, 6) nach dem Prinzip der Lichttechnik aufgebaut ist.

5. Vorrichtung nach Anspruch 4, **dadurch gekennzeichnet**, daß die Sender-/Empfängereinrichtung (5,6) mit Infrarotlicht arbeitet.

6. Vorrichtung nach einem der vorhergehenden Ansprüche, **dadurch gekennzeichnet**, daß die Sender-/Empfängereinrichtungen (5, 6) an dem Portal (1) angeordnet sind.

7. Vorrichtung nach einem der vorhergehenden Ansprüche, **dadurch gekennzeichnet**, daß die Sender-/Empfängereinrichtung (5, 6) die Fahrbewegung des Portals (1) blockiert solange eine Änderung der empfangenen Signale herrscht.

8. Vorrichtung nach einem der vorhergehenden Ansprüche, **dadurch gekennzeichnet**, daß die Sender-/Empfängereinrichtung (5, 6) zur Feststellung der jeweiligen seitlichen Position eines Fahrzeuges am Portal (1) horizontal und quer zur Bewegungsrichtung (B) verschiebbar angeordnet ist, um nach Maßgabe der festgestellten Position Arbeitsaggregate (2') des Portals (1) zu steuern.

9. Vorrichtung nach Anspruch 1, **dadurch gekennzeichnet**, daß die Anzeigevorrichtungen (9, 10) am Portal (1) angeordnet sind.

10. Vorrichtung nach Anspruch 1 oder 9, **dadurch gekennzeichnet**, daß die Anzeigevorrichtungen (9, 10) optische Anzeigen abgeben.

11. Vorrichtung nach Anspruch 1 oder 9, **dadurch gekennzeichnet**, daß die Anzeigevorrichtungen (9, 10) akustische Signale oder Anweisungen abgeben.
